# EUROPÄISCHE PATENTSCHRIFT

(11) **EP 2 304 274 B1**
(45) Veröffentlichungstag und Bekanntmachung des Hinweises auf die Patenterteilung: **22.02.2012**
(21) Anmeldenummer: 09777212.3
(22) Anmeldetag: 15.07.2009
(51) Int. Cl.: F16H 59/70, F16H 63/38

(54) **VERFAHREN ZUM KALIBRIEREN EINES POSITIONSSENSORS IN EINEM KRAFTFAHRZEUGGETRIEBE**
METHOD FOR CALIBRATING A POSITION SENSOR IN A MOTOR VEHICLE GEAR
PROCÉDÉ D'ÉTALONNAGE D'UN CAPTEUR DE POSITION DANS UNE TRANSMISSION DE VÉHICULE AUTOMOBILE

(30) Priorität: 16.07.2008 DE 202008009558 U
(43) Veröffentlichungstag der Anmeldung: 06.04.2011
(73) Patentinhaber: Rollax GmbH & Co. Kg, 32107 Bad Salzuflen (DE)
(72) Erfinder: RÖSCH, Wolfgang, 33611 Bielefeld (DE); ULLRICH, Thomas, 33659 Bielefeld (DE)
(74) Vertreter: TER MEER - STEINMEISTER & PARTNER GbR
(86) Internationale Anmeldenummer: PCT/EP2009/005146
(87) Internationale Veröffentlichungsnummer: WO 2010/006781

(56) Entgegenhaltungen:
- DE-A1- 4 307 596
- DE-A1- 19 654 004
- DE-A1- 19 938 110
- DE-A1-102005 034 864
- DE-C1- 3 443 176
- DE-C1- 19 509 878

## Beschreibung

Die Erfindung betrifft ein Verfahren zum Kalibrieren eines Positionssensors in einem Kraftfahrzeuggetriebe.

Aus DE 43 07 596 C2 ist eine Rasteinrichtung für Schaltgetriebe bekannt, mit einem beweglich in einem Gehäuse gehaltenen Druckglied, das elastisch in eine aus dem Gehäuse herausragende Position vorgespannt ist, und mit einem durch das Druckglied betätigten elektrischen Signalgeber. Diese Rasteinrichtung dient dazu, eine Schaltwelle des Schaltgetriebes in der jeweils gewählten Position zu arretieren. Das Druckglied ist elastisch gegen ein auf der Schaltwelle gebildetes Schaltgebirge vorgespannt und in der Lage, in verschiedene Vertiefungen des Schaltgebirges einzurasten, die jeweils einer bestimmten Schaltposition entsprechen. In das Gehäuse ist als Signalgeber ein Schalter integriert, der als Rückfahrlichtschalter dient und immer dann geschlossen wird, wenn sich das Druckglied in der Rastvertiefung für den Rückwärtsgang befindet.

Aus DE 195 09 878 C1 ist eine ähnliche Rasteinrichtung bekannt, die zusätzlich einen Toleranzausgleichsmechanismus aufweist, der es erlaubt, etwaige Toleranzen hinsichtlich der Form des Schaltgebirges und der Einbauposition des Gehäuses der Rasteinrichtung automatisch auszugleichen.

Wenn, wie in DE 10 2005 034 864 beschrieben wird, der Signalgeber ein Wegsensor zur Messung der Position des Druckgliedes relativ zum Gehäuse ist, so ist es im Prinzip möglich, unterschiedliche Tiefen der Vertiefungen im Schaltgebirge, in denen sich das Druckglied jeweils befindet, quantitativ zu messen und somit die jeweilige Schaltposition des Getriebes anhand unterschiedlicher Tiefen der Rastvertiefungen zu erfassen. Auf diese Weise kann nicht nur eine spezielle Schaltposition abgetastet werden, etwa die des Rückwärtsgangs, sondern durch quantitative Auswertung des Signals des Signalgebers kann zwischen mehreren unterschiedlichen Schaltpositionen des Getriebes unterschieden werden. So erhält man einen Positionssensor, mit dem verschiedene Getriebepositionen erfaßt werden können, beispielsweise neben dem Rückwärtsgang auch die Neutralstellung des Getriebes.

Aufgabe der Erfindung ist es ein Verfahren zur einfachen und genauen Kalibrierung eines solchen Positionssensors anzugeben.

Diese Aufgabe wird erfingdungsgemäß dadurch gelöst, daß nach dem Einbau des Gehäuses des Positionssensors in das Getriebegehäuse mit dem Wegsensor mindestens eine Kalibrationsmessung für mindestens eine Getriebeposition durchgeführt wird und anhand des Ergebnisses dieser Kalibrationsmessung für jede zu erfassende Getriebeposition eine Toleranzzone für den zugehörigen Meßwert des Wegsensors definiert wird.

Bei einem Sensor, der nach diesem Verfahren kalibriert wird, bleibt die Entscheidung, in welcher Position sich das Getriebe aktuell befindet, einer besonderen Auswertungselektronik vorbehalten, die nicht notwendigerweise Bestandteil des Sensors selbst sein muß. Der Sensor liefert an diese Auswertungselektronik lediglich das Ergebnis der Wegmessung, und wenn dieses Ergebnis innerhalb einer der bei der Kalibrierung definierten Toleranzzone liegt, so erkennt die Auswertungselektronik, daß sich das Getriebe in der zu dieser Toleranzzone gehörenden Position befindet. Da die Kalibrationsmessung erst nach dem Einbau des Gehäuses des Positionssensors in das Getriebegehäuse erfolgt, lassen sich durch die Kalibrierung alle Toleranzen eliminieren, die Einfluß auf das Ergebnis der Wegmessung haben.

Vorteilhafte Ausgestaltungen der Erfindung sind in den Unteransprüchen angegeben.

Gemäß einer vorteilhaften Weiterbildung der Erfindung erfolgt im Laufe der Nutzungsdauer des Getriebes ständig oder wenigstens von Zeit zu Zeit eine Nachkalibrierung. Wenn Alterungs- oder Verschleißerscheinungen dazu führen, daß die für die verschiedenen Getriebepositionen gemessenen Wege des Druckgliedes eine zeitliche Drift aufweisen, so läßt sich dies durch Vergleich der zeitlich nacheinander erhaltenen Meßergebnisse feststellen und die Toleranzzonen lassen sich entsprechend neu anpassen. Wenn sich dabei zeigt, daß sich die Toleranzzonen für zwei verschiedene Getriebepositionen einander annähern und einander zu überlappen drohen, kann ein Warnsignal ausgegeben und damit eine Reparatur der betroffenen Getriebekomponenten veranlaßt werden.

Das erfindungsgemäße Verfahren ist besonders vorteilhaft bei Fahrzeugen mit einer Start/Stop-Automatik, bei der auch erkannt werden muß, ob sich das Getriebe in einer Fahrposition oder in der Neutralstellung befindet. Ebenso erlaubt es die Erfindung, auch andere Schaltstellungen zu erfassen, etwa die für den ersten Gang, den zweiten Gang, etc., und dem Fahrer somit eine Rückmeldung über die jeweils eingestellte Getriebeposition zu geben. Daneben kann der Positionssensor selbstverständlich auch wie bisher als Rückfahrlichtschalter dienen.

Da es mit Hilfe des Kalibrierungsverfahrens möglich ist, die Einflüsse praktisch sämtlicher Toleranzen zu eliminieren, können die Unterschiede in den Niveaus des Schaltgebirges für die verschiedenen Getriebepositionen sehr klein gewählt werden. Das hat den Vorteil, daß die Kraft, mit der das Druckglied gegen das Schaltgebirge vorgespannt wird, für die verschiedenen Getriebepositionen nahezu gleich ist, so daß der Fahrer stets im wesentlichen denselben Rastwiderstand spürt, unabhängig davon, welchen Gang er gerade einlegt.

Im folgenden werden ein Ausführungsbeispiele anhand der Zeichnung näher erläutert.

Es zeigen:
- Fig. 1: einen axialen Schnitt durch eine Rasteinrichtung, die zugleich einen Positionssensor für ein Kraftfahrzeuggetriebe bildet;
- Fig. 2: eine Teilansicht der Rasteinrichtung in Verbindung mit einer im Schnitt dargestellten Schaltwelle;
- Fig. 3: ein Diagramm zur Erläuterung der Auswertung des Signals eines Wegsensors der Rasteinrichtung;
- Fig. 4: einen Schnitt durch ein Getriebe mit einem Positionssensor gemäß einem anderen Ausführungsbeispiel; und
- Fig. 5: ein Flußdiagramm für das erfindungsgemäße Verfahren.

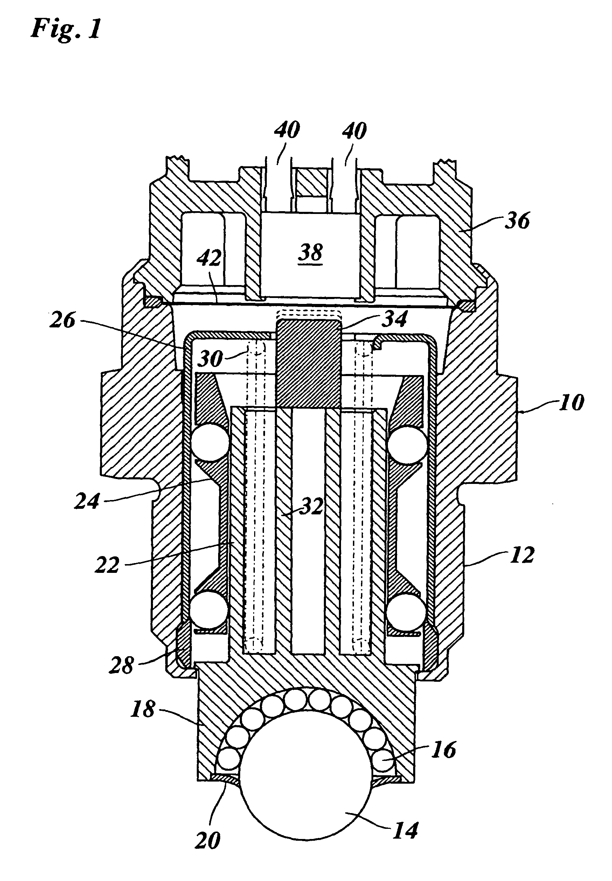

Eine in Fig. 1 gezeigte Rasteinrichtung weist ein Gehäuse 10 in der Form einer sogenannten Arretierschraube auf, die ein Außengewinde 12 besitzt, mit dem sie in ein hier nicht gezeigtes Gehäuse eines Schaltgetriebes eingeschraubt werden kann. Am in das Getriebegehäuse hineinragenden Ende des Gehäuses 10 ist als Druckglied 14 eine Rastkugel angeordnet, die mit Stützkugeln 16 reibungsarm in einer Lagerschale 18 gelagert und durch einen Haltering 20 gesichert ist. Die Lagerschale 18 bildet das Ende einer zylindrischen Hülse 22, die in einem Kugellager 24 gelagert und innerhalb eines begrenzten Bereichs axial in dem Gehäuse 10 beweglich ist. Eine äußere Laufbahn für die Kugeln des Kugellagers 24 wird durch einen in das Gehäuse eingepreßten Topf 26 aus tiefgezogenem und gehärtetem Blech gebildet, der an seinem offenen unteren Ende durch einen Konusring 28 gehalten ist und dessen bis auf eine zentrale Öffnung geschlossenes oberes Ende ein Widerlager für eine Feder 30 bildet. Die Feder 30 verläuft axial innerhalb der Hülse 22 und stützt sich mit ihrem unteren Ende an der Lagerschale 18 ab. Die Feder 30 umgibt ein koaxial im Inneren der Hülse 22 gebildetes Innenrohr 32, das an seinem oberen Ende einen Magneten 34 (Permanentmagnet) trägt, der nach oben aus der Öffnung des Topfes 26 herausragt.

In das obere Ende des Gehäuses 10 ist eine in der Zeichnung nur teilweise dargestellte Kappe 36 aus Kunststoff eingesetzt, in der ein magnetischer Wegsensor 38, beispielsweise ein Hall-Sensor, so gehalten ist, daß er dem oberen Ende des Magneten 34 mit Abstand gegenüberliegt. Elektrische Kontakte 40 des Wegsensors 38 sind nach oben aus der Kappe 36 herausgeführt.

Der Wegsensor 38 reagiert auf das Magnetfeld des Magneten 34 und ist in der Lage, den Abstand zwischen dem Magneten 34 und dem Wegsensor 38 mit hoher Präzision, beispielsweise mit einer Genauigkeit von wenigen µm zu messen. An den Kontakten 40 kann somit ein mehrwertiges, beispielsweise analoges, elektrisches Signal abgegriffen werden, das die axiale Position des Magneten 34 präzise anzeigt. In Fig. 1 sind verschiedene mögliche Positionen des Magneten 34 gestrichelt angedeutet. Das analoge Signal des Weggebers 38 kann dann wahlweise durch eine analoge elektronische Schaltung ausgewertet oder zunächst digitalisiert und dann durch eine digitale elektronische Schaltung weiter ausgewertet werden.

Im gezeigten Beispiel ist somit der Wegsensor 38 ein berührungsloser Sensor, was den Vorteil hat, daß Verschleiß- und Verschmutzungsprobleme vermieden werden. Außerdem besteht die Möglichkeit, den mechanischen Teil der Rasteinrichtung durch eine dünne Trennwand oder Membran 42 aus nichtmagnetischem Material von dem Wegsensor zu trennen und so den mechanischen Teil der Rasteinrichtung sicher einzukapseln und zugleich den Wegsensor 38 gegen Verschmutzung zu schützen.

Anstelle eines Hall-Sensors können als Wegsensor 38 wahlweise auch andere berührungslose Sensoren eingesetzt werden, beispielsweise ein induktiver Sensor oder auch ein kapazitiver Sensor. In diesen Fällen könnte der Magnet 34 durch einen elektrisch leitenden Körper ersetzt werden.

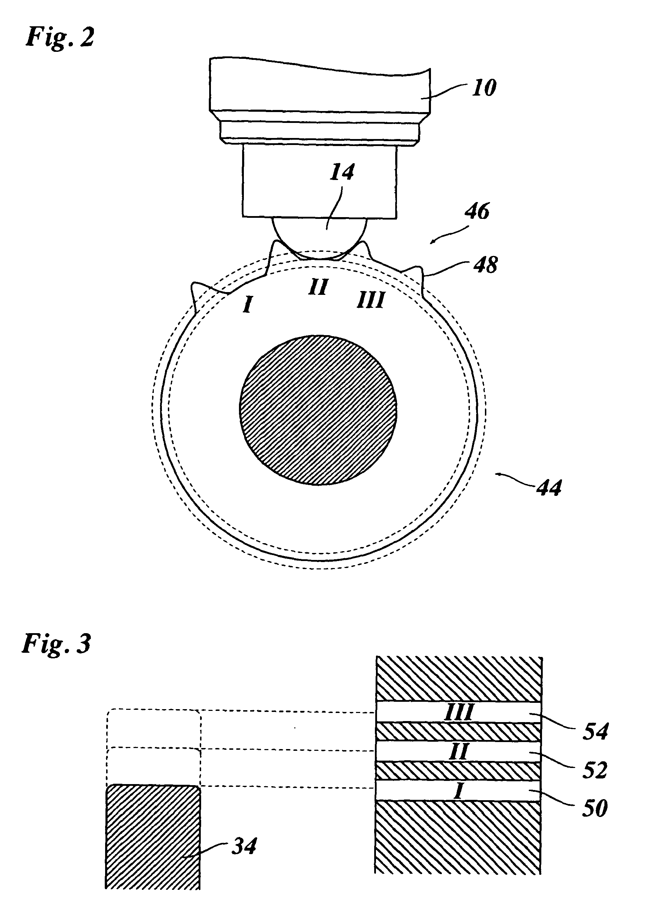

In Fig. 2 sind der untere Teil des Gehäuses 10 und das Druckglied 14 in Verbindung mit einer Schaltwelle 44 eines Kraftfahrzeugschaltgetriebes gezeigt. Die Schaltwelle 44 trägt ein Schaltgebirge 46 mit drei in verschiedenen Umfangsbereichen gebildeten Vertiefungen, die hier mit I, II und III bezeichnet sind und die durch Erhebungen 48 des Schaltgebirges voneinander getrennt sind. Je nach Schaltstellung des Getriebes rastet das Druckglied 14 in einer der Vertiefungen ein, im gezeigten Beispiel in der Vertiefung II.

Obgleich dies in der Zeichnung nicht dargestellt ist, können die Vertiefungen I, II, III (und ggf. weitere, nicht gezeigte Vertiefungen) auch so gestaltet sein, daß das Druckglied 14 nicht nur eine Rastierung in Drehrichtung der Schaltwelle 44 bewirkt, sondern auch in deren Axialrichtung.

Die drei Vertiefungen I. II und III unterscheiden sich in ihrer Tiefe. In Fig. 2 sind jeweils die Radien des Bodens der Vertiefung gestrichelt eingezeichnet. Jeder Schaltstellung des Getriebes entspricht somit eine Vertiefung mit anderer Tiefe und dementsprechend eine andere axiale Position des Druckgliedes 14 und folglich ein anderer Abstand zwischen dem Magneten 34 und dem Wegsensor 38 in Fig. 1. Im gezeigten Beispiel kann etwa die Vertiefung I dem Rückwärtsgang, die Vertiefung II der Neutralposition des Getriebes und die Vertiefung III den übrigen Fahrstufen des Getriebes zugeordnet sein. Wahlweise ist durch eine entsprechend größere Anzahl von Vertiefungen, die in Umfangsrichtung oder auch in Axialrichtung auf der Schaltwelle angeordnet sein können, auch eine Differenzierung der verschiedenen Vorwärts-Fahrstufen möglich.

In Fig. 3 ist schematisch dargestellt, wie das Signal des Wegsensors 38, das die Position des Magneten 34 angibt, elektronisch ausgewertet werden kann, um den jeweiligen Zustand des Schaltgetriebes zu erkennen. In Fig. 3 ist der Magnet 34 in durchgezogenen Linien in seiner tiefsten Position gezeigt, die der Vertiefung I entspricht. Die den anderen Vertiefungen entsprechenden Positionen sind gestrichelt eingezeichnet. Jeder dieser Positionen ist ein bestimmter Wert des Signals des Wegsensors 38 zugeordnet. Wenn der vom Wegsensor 38 tatsächlich gemessene Wert sich um weniger als ein bestimmtes Toleranzmaß von der Position unterscheidet, die exakt der Vertiefung I entsprechen sollte, also in einer Toleranzzone liegt, die in Fig. 3 mit 50 bezeichnet ist, so erkennt die Auswertungselektronik, daß das Druckglied 14 in der Vertiefung I eingerastet ist (Rückwärtsgang). Entsprechend wird die Vertiefung II oder III erkannt, wenn der gemessene Wert in der Zone 52 bzw. 54 liegt. Die Toleranzzonen sind jedoch durch gewisse "verbotene Zonen" voneinander getrennt, in denen sich das gemessene Signal nicht eindeutig einer bestimmten Getriebeposition zuordnen läßt. Auf diese Weise wird eine sichere und robuste Erkennung des jeweiligen Getriebezustands ermöglicht. Wenn der gemessene Wert nicht in einer der Zonen 50, 52, 54 liegt, so gilt das Signal als nicht auswertbar, und falls dieser Zustand länger anhält, kann eine Fehlermeldung ausgegeben werden.

Die Lage der Toleranzzonen 50, 52 und 54 relativ zu einander ist durch die maschinelle Bearbeitung des Schaltgebirges 46 bestimmt und ist daher für eine gegebene Getriebebaureihe mit hinreichender Genauigkeit bekannt. Die absolute Lage dieser Zonen ist auch von der Einbauposition des Gehäuses 10 in das Getriebegehäuse abhängig und kann deshalb von Getriebe zu Getriebe leicht variieren. Diese Variationen lassen sich jedoch dadurch ausgleichen, daß nach dem Einbau des Gehäuses mindestens eine Messung für eine der Vertiefungen I, II oder III ausgeführt wird und die Lage der Toleranzzonen 50, 52, 54 entsprechend kalibriert wird.

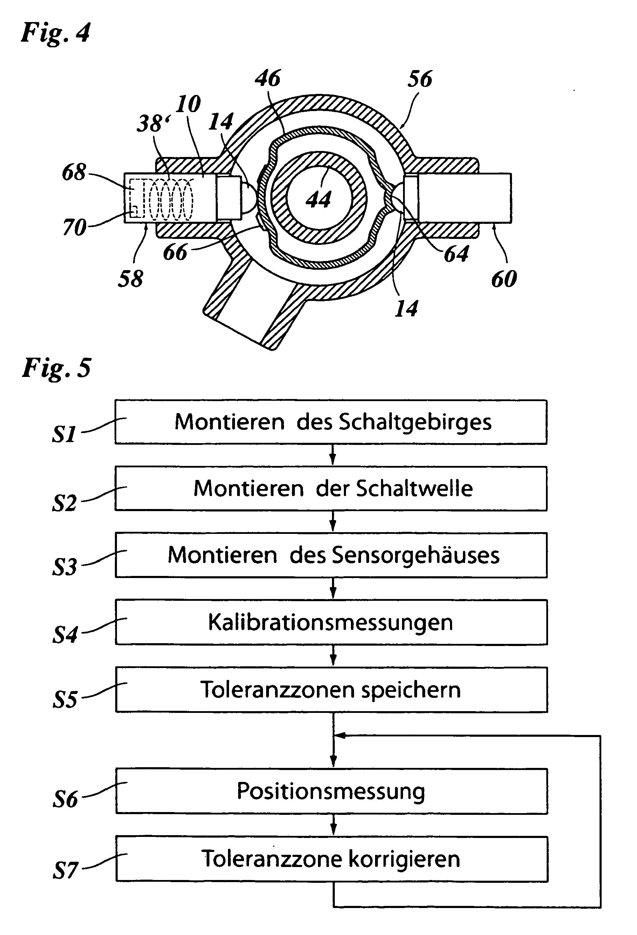

Während in dem bisher beschriebenen Ausführungsbeispiel der Getriebepositionssensor zugleich eine Rasteinrichtung zur mechanischen Arretierung der Schaltwelle bildet, ist es wahlweise auch möglich, die Funktionen der Positionsmessung und der Rastierung zu trennen. Als Beispiel zeigt Fig. 4 einen Schnitt durch ein Getriebegehäuse 56, in dem die Schaltwelle 44 gelagert ist, die ihrerseits das Schaltgebirge 46 trägt. Das Getriebegehäuse 56 nimmt hier an zwei Positionen, die einander in Bezug auf die Schaltwelle 44 diametral gegenüberliegen, einerseits einen Positionssensor 58 und andererseits eine Rasteinrichtung 60 auf. Der Positionssensor 58 und die Rasteinrichtung 60 haben jeweils ein Druckglied 14, das gegen das Schaltgebirge 46 vorgespannt ist, und können identisch aufgebaut sein, nur daß die Rasteinrichtung 60 keinen Wegsensor aufzuweisen braucht.

Auf der Seite der Rasteinrichtung 60 bildet das Schaltgebirge 46 eine axiale Führungsnut 64, in die das Druckglied 14 eingreift, so daß die Schaltwelle 44 in ihrer Winkelstellung arretiert wird, während sie in Axialrichtung beweglich ist (z. b. zur Wahl der Schaltgasse). Wenn die Schaltwelle 44 in einer gegebenen Axialposition um ihre Achse gedreht wird, um einen bestimmten Gang zu wählen, so tastet das Druckglied 14 des Positionssensors 18 verschiedene Plateaus 66 auf der dem Positionssensor zugewandten Seite des Schaltgebirges 46 ab, die jeweils einer bestimmten Getriebeposeition zugeordnet sind und sich in ihrer Höhe unterscheiden. Die jeweils gewählte Getriebeposition wird erkannt, indem mit Hilfe des Wegsensors 38' in dem Positionssensor 58 die Höhe des jeweiligen Plateaus gemessen wird.

Die in Fig. 4 gezeigte Bauweise mit gegenüberliegender Anordnung von Positionssensor 58 und Rasteinrichtung 60 hat den Vorteil, daß die von den Druckgliedern 14 ausgeübten elastischen Kräfte einander gegenseitig aufheben, so daß die Schaltwelle 44 besser ausbalanciert ist.

Als Wegsensor 38' ist in diesem Beispiel ein induktiver Sensor vorgesehen, dessen Signal in einer unmittelbar in dem Gehäuse 10 angeordneten Auswertungselektronik 68 ausgewertet wird. Die Auswertungselektronik enthält auch einen Temperatursensor 70, der die aktuelle Temperatur des Getriebes und des Positionssensors 58 mißt. Die gemessene Temperatur kann einerseits dazu verwendet werden, Wärmeausdehnungen derjenigen Getriebe- und Sensorkomponenten zu kompensieren, die das Ergebnis der Wegmessung verfälschen würden, sie kann jedoch zugleich auch dazu benutzt werden, die bekannte Temperaturdrift des induktiven Wegsensors 38' und ggf. anderer Komponenten der Auswertungselektronik 68 selbsst zu kompensieren. Generell erlaubt dieses Konzept den Einsatz von Wegsensoren, die nur eine geringe Temperaturstabilität aufzuweisen brauchen.

Bei der Montage des in Fig. 4 gezeigten Getriebes wird zunächst das Schaltgebirge 46 auf der Schaltwelle 44 montiert und anschließend wird die Schaltwelle in das Getriebegehäuse 56 eingebaut und dort mit nicht gezeigten Lagern gelagert. Die Gehäuse des Positionssensors 58 und der Rasteinrichtung 60 werden dann in der jeweils vorgesehenen Position in das Getriebegehäuse 56 eingebaut, beispielsweise eingeschraubt oder eingepreßt. Erst am Ende der Montagelinie, wenn zumindest all diejenigen Komponenten des Getriebes montiert sind, die Einfluß auf die Bewegung des Druckgliedes 14 im Positionssensor 58 haben können, wird dieser Positionssensor kalibriert. Auf diese Weise wird erreicht, daß bei der Kalibrierung alle relevanten Toleranzen eliminiert werden, beispielsweise Toleranzen der Lager für die Schaltwelle 44, Toleranzen bei der Montage des Schaltgebirges 46 auf der Schaltwelle sowie Toleranzen beim Einbau des Positionssensors 58 in das Getriebegehäuse 56.

In Fig. 5 sind die verschiedenen Montage- und Kalibrierungsschritte in einem Flußdiagramm dargestellt. Die Reihenfolge der Montageschritte S1 bis S3 ist dabei nicht zwingend. Wesentlich ist nur, daß diese Montageschritte vor dem Schritt S4 stattfinden, in dem die Kalibrationsmessungen erfolgen. Bei den Kalibrationsmessungen wird vorzugsweise mit Hilfe des Wegmessers 38 die Position des Druckgliedes relativ zum Gehäuse 10 in jeder Getriebeposition. d.h., für jedes Plateau 66 gemessen. Zweckmäßig wird dabei die Schaltwelle mehrfach zwischen den verschiedenen Getriebepositionen bewegt, und es erfolgen mehrere Messungen, so daß sich anhand der Meßergebnisse nicht nur die Lagen der entsprechenden Toleranzzonen, sondern anhand der Streuung der Meßergebnisse auch die Breiten der Toleranzzonen geeignet bestimmen lassen (siehe Fig. 3).

Im Laufe der Nutzungsdauer des Schaltgetriebes kann Verschleiß an den Druckgliedern 14 und an den entsprechenden Konturen des Schaltgebirges 46 auftreten, so daß sich die den einzelnen Getriebepositionen zugeordneten Toleranzzonen verschieben. Entsprechende Verschiebungen können sich auch durch andere Effekte, etwa durch Wärmeausdehnung des Getriebegehäuses 56 und dergleichen ergeben. Bei dem hier vorgeschlagenen Verfahren ist deshalb, nachdem die eigentliche Kalibrierung mit dem Speichern der Toleranzzonen in Schritt S5 abgeschlossen ist, während der Betriebsdauer des Getriebes eine fortlaufende Nachkalibrierung vorgesehen. In Schritt S6 wird eine Positionsmessung durchgeführt, bei der die Lage des Druckgliedes relativ zum Gehäuse bestimmt wird. Die Auswertungselektronik vergleicht dann das Meßergebnis mit den gespeicherten Toleranzzonen und meldet die so ermittelte Getriebeposition an eine übergeordnete Kontrollinstanz. Weiterhin wird in der Auswertungselektronik aus der aktuellen Positionsmessung und einer oder mehreren vorangegangenen Positionsmessungen für dieselbe Getriebeposition ein gleitender Mittelwert gebildet, und anhand dieses gleitenden Mittelwertes sowie ggf. anhand der gemessenen Streuung der Meßwerte wird in Schritt S7 die Toleranzzone für diese Getriebeposition neu berechnet. Entsprechend verfährt man auch mit den übrigen Getriebepositionen. Die Schritte S6 und S7 werden dann im Lauf der Betriebsdauer des Getriebes zyklisch wiederholt, beispielsweise nach jedem Schaltvorgang oder jeweils nach einer bestimmten Anzahl von Schaltvorgängen oder nach einer gewissen Betriebsdauer.

## Patentansprüche

1. Verfahren zum Kalibrieren eines Positionssensors (58) in einem Kraftfahrzeuggetriebe mit einem Getriebegehäuse (56), in das ein Gehäuse (10) für den Positionssensor eingebaut ist, der ein beweglich in dem Gehäuse (10) gehaltenes Druckglied (14), das elastisch gegen ein Schaltgebirge (46) vorgespannt ist, und einen durch das Druckglied (14) betätigten elektrischen Wegsensor (38; 38') zur Messung der Position des Druckgliedes (14) relativ zum Gehäuse (10) aufweist, **dadurch gekennzeichnet, daß** nach dem Einbau des Gehäuses (10) des Positionssensors (58) in das Getriebegehäuse (56) mit dem Wegsensor (38; 38') mindestens eine Kalibrationsmessung für mindestens eine Getriebeposition durchgeführt wird und anhand des Ergebnisses dieser Kalibrationsmessung für jede zu erfassende Getriebeposition eine Toleranzzone (50, 52, 54) für den zugehörigen Meßwert des Wegsensors definiert wird.

2. Verfahren nach Anspruch 1, bei dem mindestens je eine Kalibrationsmessung für jede zu erfassende Getriebeposition ausgeführt wird.

3. Verfahren nach Anspruch 1 oder 2, bei dem die Toleranzzonen (50, 52, 54) bei laufendem Betrieb des Kraftfahrzeuggetriebes fortlaufend anhand der Ergebnisse aktueller Positionsmessungen korrigiert werden.

4. Verfahren nach einem der vorstehenden Ansprüche, bei dem die Temperatur des Getriebegehäuses (56) gemessen wird und das Ergebnis der Wegmessung im Hinblick auf Wärmeausdehnenungen von Getriebe- und/oder Sensorkomponenten korrigiert wird.

5. Verfahren nach einem der vorstehenden Ansprüche, bei dem die Temperatur des Wegsensors (38') gemessen wird und das Ergebnis der Wegmessung im Hinblick auf eine Tempraturdrift des Wegsensors korrigiert wird.

6. Verfahren nach den Ansprüchen 4 und 5, bei dem die Temperatur einer in das Gehäuse des Postitionssensors (58) integrierten Auswertungselektronik (68) als für die Temperatur des Postitionssensors (58) und des Getriebegehäuses (56) repräsentative Temperatur gemessen wird.

7. Verfahren nach Anspruch 5 oder 6, bei dem als Wegsensor (38') ein induktiver Sensor verwendet wird.

## Claims

1. A method of calibrating a position sensor (58) in an automotive transmission having a transmission housing (56) having mounted therein a casing (10) for the position sensor which comprises a pressure member (14) movably supported in the casing (10) and elastically biased against a selector relief (46), and an electrical displacement sensor (38; 38') actuated by the pressure member (14) for measuring the position of the pressure member (14) relative to the casing (10), **characterised in that**, after the casing (10) of the position sensor (58) has been mounted in the transmission housing (56), the displacement sensor (38; 38') is used for performing at least one calibration measurement for at least one gear position, and, for each gear position to be detected, a tolerance range (50, 52, 54) for the corresponding measurement value of the displacement sensor is defined on the basis of the result of the calibration measurement.

2. The method according to claim 1, wherein at least one calibration measurement is performed for each gear position to be detected.

3. The method according to claim 1 or 2, wherein the tolerance ranges (50, 52, 54) are continually corrected on the basis of the results of actual position measurements while the transmission is operating.

4. The method according to any of the preceding claims, wherein the temperature of the transmission housing (56) is measured and the result of the displacement measurement is corrected for thermal expansions of component parts of the transmission and/or the sensor.

5. The method according to any of the preceding claims, wherein the temperature of the displacement sensor (38') is measured and the result of the displacement measurement is corrected for a temperature drift of the displacement sensor.

6. The method according to the claims 4 and 5, wherein the temperature of an evaluation electronics (68) integrated in the casing of the position sensor (58) is measured as a temperature representative of the temperature of the position sensor (58) and the transmission housing (56).

7. The method according to claim 5 or 6, wherein an inductive sensor is used as displacement sensor (38').

## Revendications

1. Procédé d'étalonnage d'un capteur de position (58) dans une transmission de véhicule automobile avec un boitier de transmission (56) dans lequel est logé un boitier (10) pour le capteur de position, qui comporte un élément de compression (14) maintenu mobile dans le boitier (10), qui est précontraint contre un massif de commutation (46), et un capteur de course (38, 38') électrique actionné par l'élément de compression (14) pour mesurer la position de l'élément de compression (14) par rapport au boitier (10), **caractérisé en ce que** après la mise en place du boitier (10) du capteur de position (58) dans le boitier de transmission (56) on effectue avec le capteur de course (38,38') au moins une mesure d'étalonnage pour au moins une position de transmission et à l'aide du résultat de cette mesure d'étalonnage on définit pour chaque position de transmission à détecter une zone de tolérances (50,52,54) pour la valeur de mesure correspondante du capteur de course.

2. Procédé selon la revendication 1, dans lequel on effectue au moins une mesure d'étalonnage pour chaque position de transmission à détecter.

3. Procédé selon la revendication 1 ou 2, dans lequel les zones de tolérances (50,52,54) lors du fonctionnement courant de la transmission de véhicule automobile sont corrigées en continu à l'aide des résultats des mesures de position actuelles.

4. Procédé selon l'une des revendications précédentes, dans lequel on mesure la température du boitier de transmission (56) et on corrige le résultat de la mesure de course en fonction des dilatations thermiques des composants transmission et/ou capteurs.

5. Procédé selon des revendications précédentes, dans lequel on mesure la température du capteur de course (38') et on corrige le résultat de la mesure en fonction d'une dérive en température du capteur de course.

6. Procédé selon les revendications 4 et 5, dans lequel on mesure comme température représentative de la température du capteur de position (58) et du boitier de transmission (56), la température d'une électronique d'interprétation (68) intégrée dans le boitier du capteur de position (58).

7. Procédé selon la revendication 5 ou 6, dans lequel on utilise un capteur inductif comme capteur de course (38').
